(19) Europäisches Patentamt
European Patent Office
Office européen des brevets

(11) **EP 3 895 303 B1**

(12) **EUROPÄISCHE PATENTSCHRIFT**

(45) Veröffentlichungstag und Bekanntmachung des Hinweises auf die Patenterteilung:
**27.09.2023 Patentblatt 2023/39**

(21) Anmeldenummer: **19817153.0**

(22) Anmeldetag: **03.12.2019**

(51) Internationale Patentklassifikation (IPC):
**H02P 6/12** (2006.01)     **H02P 21/00** (2016.01)

(52) Gemeinsame Patentklassifikation (CPC):
**H02P 6/12; H02P 21/00**

(86) Internationale Anmeldenummer:
**PCT/EP2019/025430**

(87) Internationale Veröffentlichungsnummer:
**WO 2020/119940 (18.06.2020 Gazette 2020/25)**

(54) **VERFAHREN ZUM ÜBERWACHEN EINES ANTRIEBSSYSTEMS UND ANTRIEBSSYSTEM**

METHOD FOR MONITORING A DRIVE SYSTEM, AND DRIVE SYSTEM

PROCÉDÉ DE SURVEILLANCE D'UN SYSTÈME D'ENTRAÎNEMENT ET SYSTÈME D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2018 DE 102018009682**

(43) Veröffentlichungstag der Anmeldung:
**20.10.2021 Patentblatt 2021/42**

(73) Patentinhaber: **SEW-EURODRIVE GmbH & Co. KG**
**76646 Bruchsal (DE)**

(72) Erfinder: **KRAH, Jens, Onno**
**50789 Köln (DE)**

(56) Entgegenhaltungen:
**DE-A1-102009 035 998     DE-T2- 69 406 428**

**Beschreibung**

Die Erfindung betrifft ein Verfahren zum Überwachen eines Antriebssystems und ein Antriebssystem.

Es ist allgemein bekannt, dass ein Antriebssystem einen wechselrichtergespeisten Elektromotor aufweist.

Aus der DE 10 2012 205 540 A1 ist ein Verfahren zur sensorlosen Regelung einer fremderregten Synchronmaschine bekannt.

Aus der DE 10 2014 224 555 A1 ist eine Überwachung einer Drehfeldmaschine bekannt.

Aus der DE 10 2009 035998 A1 ist als nächstliegender Stand der Technik ein Verfahren zum fehlersicheren Überwachen einer Bewegungsgröße an einem elektrischen Antrieb bekannt.

Aus der DE 694 06 428 T2 ist ein Verfahren zur Begrenzung des Rückführungsstromes in Statorwindungen bekannt.

Der Erfindung liegt daher die Aufgabe zugrunde, ein Verfahren zum Überwachen eines Antriebssystems und ein Antriebssystem weiterzubilden, wobei die Sicherheit mit geringfügigem Aufwand verbesserbar ist.

Erfindungsgemäß wird die Aufgabe bei dem Verfahren zum Überwachen eines Antriebssystems nach den in Anspruch 1 und bei dem Antriebssystem nach den in Anspruch 5 angegebenen Merkmalen gelöst.

Von Vorteil ist dabei, dass von der ersten Signalelektronik ein Testsignal erzeugt und an den Wechselrichter weitergeleitet wird, das von dem auf den flussbildenden Stromanteil bezogenen Regler des Wechselrichters als Zusatz zum Sollwert berücksichtigt wird, also die Motorspannung entsprechend gestellt wird. Daher wird von der Motorspannung auch ein bei der Testfrequenz vorhandener Stromanteil bewirkt, welcher von der ersten Signalelektronik detektierbar ist. Auf diese Weise ist also die Funktion der Stromsensoren überwachbar. Denn auch wenn ohne das Testsignal der Motorstrom konstante Werte aufweisen würde, ist ein nicht verschwindender Stromanteil bei der Testfrequenz erfindungsgemäß detektierbar infolge des auf den Sollwert des Reglers eingespeisten Testsignals.

Bei einer vorteilhaften Ausgestaltung mittels einer zweiten Signalelektronik des Antriebssystems aus den erfassten Messwerten unter Verwendung der vom Winkellagensensor erfassten Winkelpositionen des Rotors des Elektromotors ebenfalls die Komponenten des Istwerts des Motorstromraumzeigers in einem rotorfesten Koordinatensystem bestimmt werden, wobei erfindungsgemäß der bei der Testfrequenz vorhandene Anteil der in Richtung des flussbildenden Stromanteils vorhandenen Komponente des Istwerts des Motorstromraumzeigers bestimmt wird und auf unzulässig große Abweichung von dem vorgegebenen Bereich überwacht wird und bei Überschreiten der zulässigen Abweichung vom vorgegebenen Bereich ein Fehlersignal ausgelöst, weitergeleitet und/oder angezeigt wird.

Von Vorteil ist dabei, dass eine erhöhte Sicherheit erreichbar ist, indem die Herausfilterung, insbesondere mittels Fourieranalyse oder Filterung, des bei der Testfrequenz vorhandenen Stromanteils des flussbildenden Motorstromanteils von der zweiten Signalelektronik auch ausgeführt wird, also redundant ausgeführt wird. Außerdem vergleichen die erste und zweite Signalelektronik miteinander den von ihnen jeweils bestimmten Wert des flussbildenden Anteils des Motorstroms und des drehmomentbildenden Anteils des Motorstroms. Somit ist eine zusätzliche Sicherheit erreichbar.

Gemäß einer vorteilhaften Ausgestaltung wird die jeweilige, von der ersten Signalelektronik bestimmte Komponente auf ein unzulässig großes Maß an Abweichung von der jeweiligen, von der zweiten Signalelektronik bestimmten Komponente überwacht, insbesondere wobei bei Überschreiten der zulässigen Abweichung vom vorgegebenen Bereich ein Fehlersignal ausgelöst, weitergeleitet und/oder angezeigt wird. Von Vorteil ist dabei, dass die Verstärkungen der Stromsensoren, insbesondere die Gleichheit der Verstärkungen der Stromsensoren, überwachbar sind. Somit ist der Defekt eines Stromsensors bezüglich der Verstärkung detektierbar.

Bei einer vorteilhaften Ausgestaltung werden mittels der Stromsensoren nur Stromwerte einer ersten und einer zweiten Motorphase erfasst und der Wert der dritten Motorphase wird rechnerisch bestimmt als mit umgekehrtem Vorzeichen versehene Summe der Stromwerte der ersten und zweiten Motorphase. Von Vorteil ist dabei, dass nur zwei Stromsensoren notwendig sind um den als Drehstrom verwendeten Motorstrom zu bestimmen.

Erfindungsgemäß wird der vom Wechselrichter dem Elektromotor bereitgestellten Spannung eine als Wechselspannung ausgeführte Testspannung aufaddiert. Von Vorteil ist dabei, dass das Testsignal auch bei ansonsten konstantem Strom bewirkt, dass die Stromsensoren veränderliche Stromwerte erfassen müssen. Somit ist ihre Funktion in einfacher Weise überwachbar, indem der erfasste Strom bei der Testfrequenz, also der Frequenz des Testsignals, insbesondere des monochromatischen Testsignals, auswertbar ist, so dass dort feststellbar ist, ob der vom Testsignal bewirkte Anteil des Stroms vorhanden ist. Somit ist eine Überwachung des entsprechenden Signalwegs erreicht.

Erfindungsgemäß wird überwacht, ob der von der Testspannung getriebene Strom in einer ersten Motorphase einen zum in einer zweiten Motorphase erfassten Stromanteil betragsgleichen, aber mit umgekehrtem Vorzeichen ausgeführten, erfassten Stromanteil aufweist und in der dritten Motorphase keinen erfassten Stromanteil aufweist, Somit ist ein Fehlersignal auslösbar ist, wenn das Ergebnis der Überwachung negativ ist. Somit ist die Verstärkung der beiden Stromsensoren ermöglicht. Insbesondere ist durch Vergleich der den beiden vom Testsignal bestromten Motorphasen zugeordneten Stromwerte überwachbar, ob einer der beiden Stromsensoren defekt wird.

Erfindungsgemäß wird überwacht, ob bei einem oder jedem Nulldurchgang des Motorstroms der Verlauf der Motorspannung zeitgleich einen Spannungssprung aufweist. Von Vorteil ist dabei, dass der Offset, insbesondere die Gleichheit der Offsets, der Stromsensoren überwachbar ist und somit ein Fehlersignal auslösbar ist, wenn das Ergebnis der Überwachung negativ ist.

Erfindungsgemäß weist das Antriebssystem einen Wechselrichter auf, welcher einen Regler für den flussbildenden Stromanteil des Motorstromraumzeigers, eine erste Signalelektronik sowie einen Elektromotor, an dem ein Winkelsensor zur Bestimmung der Winkelposition des Rotors des Elektromotors angeordnet ist, und Stromsensoren zur Erfassung des in einer jeweiligen Motorphase fließenden Stroms auf,

wobei die Signale des Winkelsensors einerseits dem Wechselrichter und andererseits der ersten Signalelektronik, insbesondere und einer zweiten Signalelektronik des Antriebssystems, zugeführt werden.

Von Vorteil ist dabei, dass eine erhöhte Sicherheit erreichbar ist.

Erfindungsgemäß weist die erste Signalelektronik ein Mittel zur Addition einer als Wechselspannung ausgeführten Testspannung auf die vom Wechselrichter dem Elektromotor bereitgestellten Spannung,

wobei das Mittel verbunden ist mit einem Mittel zur Überwachung, ob der von der Testspannung getriebene Strom in einer ersten Motorphase einen zum in einer zweiten Motorphase erfassten Stromanteil betragsgleichen, insbesondere aber mit umgekehrtem Vorzeichen ausgeführten, erfassten Stromanteil aufweist und in der dritten Motorphase keinen erfassten Stromanteil aufweist. Von Vorteil ist dabei, dass ein Testsignal einspeisbar ist und überwachbar ist, ob der Signalweg unbeeinträchtigt funktioniert und/oder arbeitet.

Erfindungsgemäß weist die erste Signalelektronik ein Mittel zur Überwachung, ob bei einem oder jedem Nulldurchgang des Motorstroms der Verlauf der Motorspannung zeitgleich einen Spannungssprung aufweist, auf. Von Vorteil ist dabei, dass der Offset der Stromsensoren in einfacher Weise ohne besonderen Zusatzaufwand überwachbar ist.

Bei einer vorteilhaften Ausgestaltung wird das Signal des jeweiligen Stromsensors zur Erfassung des jeweiligen Motorphasenstroms einem Sigma-Delta-Wandler zugeführt, dessen digitaler 1-Bit-breiter Ausgangsdatenstrom einem digitalen Filter zugeführt wird, dessen digitaler, insbesondere paralleler, insbesondere Mehrbit-breiter, Ausgangsdatenstrom dem Wechselrichter und der ersten Signalelektronik bereitgestellt wird. Von Vorteil ist dabei, dass die Verwendung des 1-Bit-breiten Datenstroms störungsanfällig ist. Somit ist bei Auftreten eines eventuellen Fehlers die Stromerfassung fehlerhaft und die nachgeordneten Überwachungen erkennen deutlich die störungsbedingten Abweichungen.

Weitere Vorteile ergeben sich aus den Unteransprüchen.

Die Erfindung wird nun anhand von schematischen Abbildungen näher erläutert:

In der Figur 1 ist ein erfindungsgemäßes Antriebssystem gezeigt, welches einen wechselrichtergespeisten Elektromotors M aufweist und zwei Signalelektroniken (1, 2). Dabei wird dem Sollwert des flussbildenden Stromanteils ein Testsignal i_d_Soll_test aufmoduliert, welches von einer ersten Signalelektronik 1 erzeugt wird.

In der Figur 2 ist ein mit X gekennzeichneter Bereich dargestellt, in welchem das mittels Stromerfassung detektierte Antwortsignal liegt, wenn die Stromsensoren fehlerfrei arbeiten.

In der Figur 3 ist die Richtung eines ortfesten Spannungstestsignals u_b dargestellt, das vom Wechselrichter dem Elektromotor M zusätzlich zur Verfügung gestellt wird, um die Verstärkungsfaktoren der Stromsensoren zu überwachen.

In der Figur 4 ist der Zusammenhang zwischen Motorstrom I und Motorspannung U_PWM im niederfrequenten Bereich dargestellt.

In der Figur 5 ist die zu Nulldurchgängen des Motorstroms synchron stattfindenden Sprünge der dem Motor bereitgestellten Spannung U_PWM dargestellt.

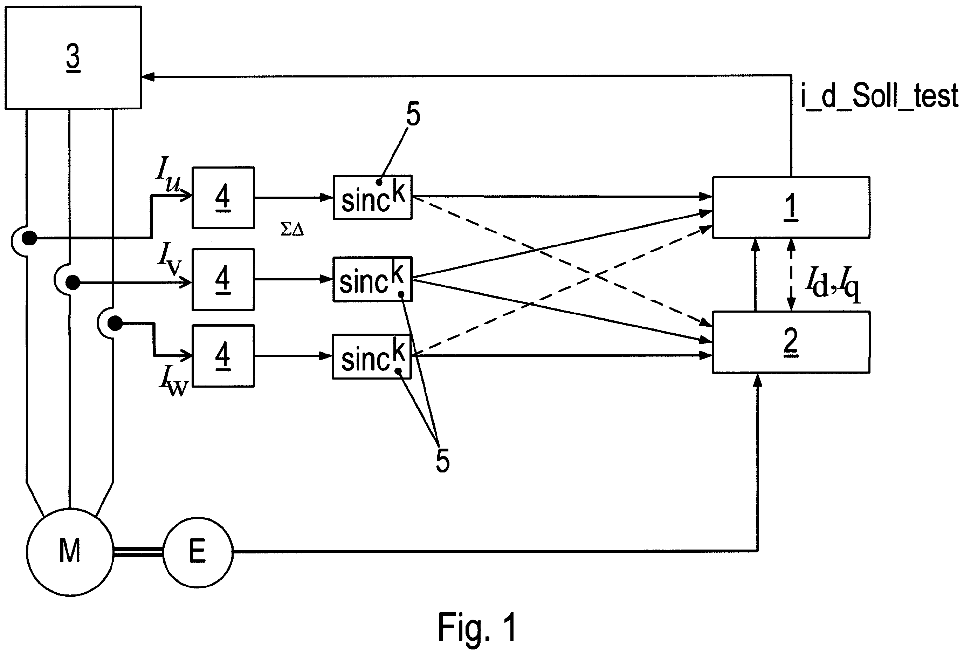

Wie in Figur 1 dargestellt, wird der als Drehstrommotor ausgeführter Elektromotor M von einem Wechselrichter 3 versorgt, indem dieser dem Motor M eine Spannung U_PWM bereitstellt. Somit ist der drehbar gelagerte Rotor des Elektromotors M in Drehbewegung versetzbar. Vorzugsweise weist der Rotor einen Kurzschlusskäfig auf, so dass der Elektromotor M ein Asynchronmotor ist, oder der Rotor weist Dauermagnete auf, so dass der Elektromotor M ein Synchronmotor ist. Auch eine gemischte Ausführung ist möglich, bei welcher dann der Rotor einen Kurzschlusskäfig und Dauermagnete aufweist. Statt der Dauermagnete sind auch mit Strom versorgte Feldspulen verwendbar.

In jedem Falls weist der Stator des Elektromotors M eine derartige Statorwicklung auf, dass ein Drehfeld erzeugt wird, welchem der Rotor ausgesetzt ist.

Der Motorstrom I wird mittels drei Stromsensoren 4 erfasst, deren Signale von einem jeweiligen Sigma-Delta-Wandler jeweils als 1 Bit-breiter digitaler Datenstrom einem jeweiligen Filter 5 zugeführt wird. Dieses jeweilige Filter 5 ist als sinc^k Filter ausgeführt. Wichtig ist dabei, dass das jeweilige Filter 5 ausgangsseitig den erfassten Wert des jeweiligen Motorphasenstroms an einer parallelen digitalen Schnittstelle einer ersten oder zweiten Signalelektronik (1, 2) zur Verfügung stellt.

Dabei ist die parallele Schnittstelle beispielsweise 8 Bit oder 16 Bit breit, kann aber auch breiter ausgeführt werden.

Somit ist mittels des Filters 5, dessen charakteristische Frequenz unter 1 MHz liegt, insbesondere im Bereich zwischen 10 kHz und 100 kHz, insbesondere 20 kHz.

Somit ist das Filter 5 derart als Tiefpass ausgeführt, dass niederfrequente Stromanteile im Wesentlichen ungedämpft, aber hochfrequente Stromanteile wesentlich bedämpft werden.

Durch die Verwendung des Sigma-Delta-Wandlers und des von ihm erzeugten 1 Bit breiten Datenstroms wirken sich Störsignale, die beispielsweise einen zusätzlichen Puls in diesen Datenstrom einbringen als Verfälschung des Stromwertes aus.

Der Elektromotor M weist einen drehbar gelagerten Rotor auf, dessen Winkellage von einem Winkellagensensor E erfasst wird. Das Sensorsignal dieses Winkellagensensors E wird an die erste und an die zweite Signalelektronik (1, 2) übertragen.

Wichtig ist, dass der ersten Signalelektronik 1 zumindest der Stromistwert eines ersten Motorphasenstroms U und der Stromistwert eines zweiten Motorphasenstroms V zugeführt werden und dass der zweiten Signalelektronik 2 zumindest der Stromistwert des zweiten Motorphasenstroms V und der Stromistwert des dritten Motorphasenstroms W zugeführt werden.

Somit ist beiden Signalelektroniken (1, 2) ermöglicht, den Motorstrom, insbesondere also den Motorstromraumzeiger, zu bestimmen.

Dabei wird jeweils eine Clark-Transformation des aus den erfassten Stromwerte gebildeten Motorstromraumzeigers ausgeführt und somit werden dann insbesondere unter Verwendung des Signals des Winkellagensensors die Komponenten im transformierten Koordinatensystem, also der flussbildende Stromanteil I_d und der drehmomentbildende Stromanteil I_q, bestimmt, insbesondere also im rotorbasierten Koordinatensystem.

Die erste Signalelektronik 1 erzeugt ein als Testsignal verwendetes Signal i_d_Soll_test. Dieses Testsignal wird von der ersten Signalelektronik 1 an den Wechselrichter 3 übertragen und dort dem Stromsollwert eines Stromreglers des Wechselrichters 3 überlagert. Der Wechselrichter 3 stellt eine durch Pulsweitenmodulation erzeugte Drehspannung U_PWM dem Motor als Motorspannung zur Verfügung.

Dabei wird die Motorspannung derart gestellt, dass der erfasste Motorstrom auf einen Stromsollwert hin geregelt wird.

Dem dem Stromregler zugeführten Stromsollwert wird das Testsignal aufaddiert.

Das Testsignal ist vorzugsweise als ein periodisches Signal ausgeführt, insbesondere als sinusförmiges Signal bei einer Testfrequenz f_test. Beispielsweise ist als Testsignal ein Signal der Form

$$A * \sin(2 * \pi * f\_test * t)$$

verwendbar, wobei A die vorgegebene Amplitude und t die Zeit ist. Die Testfrequenz f_test weist vorzugsweise einen Wert zwischen 500 Hertz und 4 kHz auf, insbesondere 1 kHz.

Somit wird die Motorspannung vom Umrichter entsprechend gestellt und der erfasste Motorstrom weist nach einer in der ersten und zweiten Signalelektronik (1, 2) jeweils ausgeführten Fouriertransformation bei der Testfrequenz f_test einen entsprechenden Anteil auf. Die Komponenten dieses Anteils in Richtung des drehmomentbildenden Stromanteils I_q und in Richtung des flussbildenden Stromanteils I_d werden bestimmt und es wird überwacht, ob dieser Anteil in einem zulässigen Bereich liegt oder davon abweicht. Bei Abweichung wird ein Fehlersignal ausgelöst.

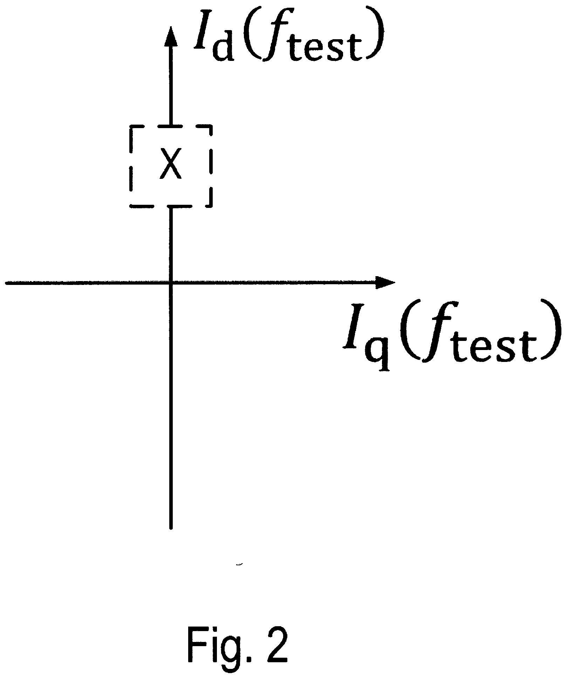

Beispielhaft ist hierzu in Figur 2 ein gekennzeichneter Bereich dargestellt, der als Beispiel den zulässigen Bereich darstellt. Dabei ist wichtig, dass die in Richtung des flussbildenden Stromanteils I_d gerichtete Komponente des Anteils viel größer ist, insbesondere mindestens zehnmal größer ist, als die in Richtung des drehmomentbildenden Stromanteils I_q gerichtete Komponente des Anteils.

Die erste Signalelektronik 1 erzeugt also ein Testsignal, das an den Wechselrichter 3 weitergeleitet wird, und überwacht den zugehörigen Anteil, welcher in dem erfassten Motorstrom enthalten ist. Somit ist auch die Funktion der Stromsensoren überwacht.

Zusätzlich bestimmt auch die zweite Signalelektronik 2 den Motorstrom I in entsprechender Weise und überwacht ebenfalls, ob der von ihr detektierte Anteil im zulässigen Bereich liegt. Somit ist eine redundante Überwachung realisierbar und die Sicherheit erhöht.

Außerdem vergleichen die beiden Signalelektroniken 1 und 2 die von ihnen jeweils bestimmten Werte des drehmomentbildenden Stromanteils I_q und des flussbildenden Stromanteils I_d. Somit ist eine zusätzliche gegenseitige Überwachung bezüglich des bestimmten Motorstroms ausgeführt.

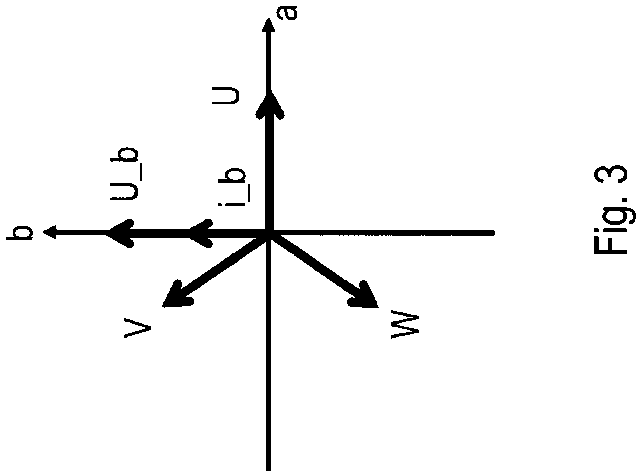

Wie in Figur 3 gezeigt, wird zur Überwachung der Verstärkung der Stromsensoren zusätzlich oder alternativ zeitlich wiederkehrend ein Spannungstestsignal u_b vom Wechselrichter 3 auf die dem Elektromotor M bereitgestellte Spannung U_PWM aufmoduliert. Das Spannungstestsignal weist wiederum eine Testfrequenz f_test auf. Dabei ist diese Spannung u_b derart gerichtet, dass in einer ersten Phase U von der Spannung kein Strom getrieben wird, sondern nur in den beiden anderen Motorphasen V und W. Dabei weist der von dieser Spannung u_b getriebene Strom i_b in der Motorphase W denselben Betrag auf wie in der Motorphase V, aber mit umgekehrtem Vorzeichen. Somit ist überwachbar, ob der erwartete Strom i_b sich einstellt oder nicht, so dass davon abhängig ein Fehlersignal erzeugbar ist.

Wie in Figur 3 dargestellt, wird das Spannungstestsignal u_b nur in b-Richtung angelegt, wobei die b-Richtung hier auf den Stator fest bezogen ist. Um den von getriebenen Strom i_b zu detektieren wird entweder eine Fourieranalyse ausgeführt und dann der bei der Testfrequenz vorhandene Stromanteil bestimmt oder ein insbesondere digital realisiertes Bandpassfilter verwendet.

Wenn drei Stromsensoren verwendet werden, also in jeder der Motorphasen ein jeweiliger Stromsensor, wird In Weiterbildung zeitlich beabstandet oder mit einer anderen Testfrequenz gleichzeitig ein Spannungstestsignal in einer anderen Richtung angelegt, so dass die Verwendung U, V, W permutiert sind. Auf diese Weise ist eine Überwachung aller drei Motorphasen und der zugehörigen Stromsensoren ermöglicht,

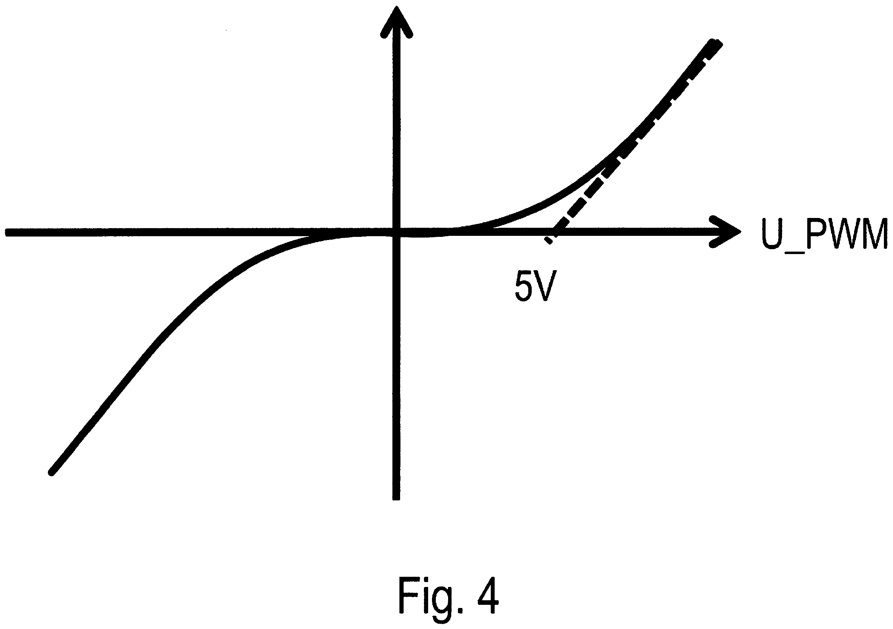

Wie in Figur 4 gezeigt, ist die Kennlinie zwischen dem von der Motorspannung U_PWM getriebenen Motorstrom I dargestellt, die jedoch nicht linear ist. Insbesondere tritt beim Stromnulldurchgang ein Spannungssprung auf, da der Wechselrichter ausgangsseitig Halbleiterbauteile, wie Dioden, aufweist.

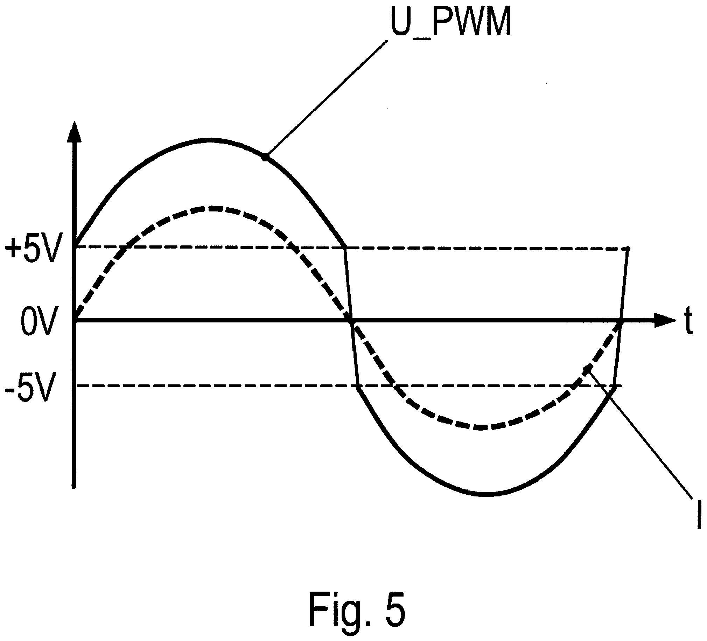

Wie in Figur 5 dargestellt, zeigt also der zeitliche Verlauf der Motorspannung U_PWM einen Sprung bei Nulldurchgang des ansonsten sinusförmig verlaufenden Motorstromes I.

Wenn die Stromsensoren 4 einen unzulässig großen Offset aufweisen, ist der Spannungssprung nicht mehr synchron zum Nulldurchgang. Erfindungsgemäß wird also der Zeitpunkt des Spannungssprungs auf ein unzulässig großes Maß an Abweichung vom Zeitpunkt des Nulldurchgangs überwacht.

Auf diese Weise ist also einerseits der Offset gemäß Figur 5 überwachbar, andererseits die Verstärkung gemäß Figur 3 und zusätzlich die Funktion der Stromsensoren gemäß Figur 1 und 2.

Insbesondere ist es mit der Erfindung ermöglicht, auch bei verschwindender Drehzahl die Funktionsweise der Stromsensoren 4 zu überwachen, weil das oder die Testsignale nicht konstante Stromwerte erzwingen. Nur wenn die Funktion der Stromsensoren gestört ist oder eine andere Störung im Antriebssystem vorliegt, können trotz Erzeugen des oder der Testsignale konstante Stromwerte auftreten.

Bei weiteren Ausführungsbeispielen weist das Antriebssystem nur zwei Stromsensoren auf, also nur in einer ersten und in einer zweiten Motorphase. Somit ist der Stromwert der dritten Motorphase als mit negativem Vorzeichen versehene Summe des Stromwertes der ersten Motorphase und des Stromwertes der zweiten Motorphase bestimmbar. Da die Stromsensoren in der genannten Weise nach Figur 1 bis Figur 5 überwacht werden, ist der Stromwert der dritten Motorphase zuverlässig bestimmt, also mit hoher Sicherheit bestimmt.

In Figur 1 sind hierzu die durchgezogenen Linien relevant, die gestrichelten Linie sind entfernbar.

Dabei ist allerdings bei der Ausführung nach Figur 3 die Testspannung U_a derart gerichtet, dass die Phase U derjenigen Motorphase entspricht, welcher kein Stromsensor 4 zugeordnet ist. Den anderen beiden Phasen sind Stromsensoren 4 zugeordnet, so dass die gemäß Figur 3 beschriebene Überprüfung ausführbar ist.

Die Ausführung nach Figur 5 ist unverändert ausführbar, wobei der Stromwert der dritten Motorphase rechnerisch ermittelt wird, wie oben genannt.

**Bezugszeichenliste**

1 erste Signalelektronik
2 zweite Signalelektronik
3 Wechselrichter
4 Stromsensor
5 digitales Filter, insbesondere sinc^k Filter

M Drehstrommotor
E Winkellagensensor
I_d flussbildender Stromanteil
I_q drehmomentbildender Stromanteil
i_d_Soll_test Testsignal
f_test Testfrequenz
U Motorstromphase
V Motorstromphase
W Motorstromphase
U_b Spannungsanteil bei der Testfrequenz f_test
I_b Testsignal
I Motorstrom
U_PWM pulsweitenmoduliert erzeugte Ausgangsspannung des Wechselrichters

**Patentansprüche**

1. Verfahren zum Überwachen eines Antriebssystems, das einen Wechselrichter (3), welcher einen Regler für den flussbildenden Stromanteil eines Motorstromraumzeigers, einen von dem Wechselrichter (3) gespeisten Elektromotor (M), insbesondere Drehstrommotor, eine erste Signalelektronik (1), einen mit dem Rotor des Elektromotors verbundenen Winkellagensensor (E) und Stromsensoren (4) zur Erfassung des in einer jeweiligen Motorphase fließenden Stroms aufweist,

   wobei zumindest der ersten Signalelektronik (1) die von den Stromsensoren (4) zur Erfassung von Motorphasenströmen erfassten Messwerte als insbesondere tiefpassgefilterter (5) digitaler Datenstrom zugeleitet werden,
   wobei die erste Signalelektronik (1), insbesondere mittels eines Mittels, ein mit einer Testfrequenz periodisches Testsignal erzeugt, welches einem Sollwert aufaddiert wird,
   wobei eine Regelabweichung die Differenz zwischen dem aus dem Testsignal und dem Sollwert gebildeten Summensignal und einem aus den Messwerten und einem Signal des Winkellagensensors (E) gebildeten Istwert des flussbildenden Anteils des Motorstromraumzeigers, insbesondere eines in einem Rotorfesten Koordinatensystem dargestellten Motorstromraumzeigers, ist,
   wobei der Wechselrichter (3) dem Elektromotor eine derartige Spannung, insbesondere pulsweitenmoduliert erzeugte Spannung bereitstellt, dass der Istwert auf das Summensignal hingeregelt wird,

wobei mittels der ersten Signalelektronik (1) aus den erfassten Messwerten unter Verwendung der vom Winkellagensensor (E) erfassten Winkelpositionen des Rotors des Elektromotors (M) die Komponenten des Istwerts des Motorstromraumzeigers in einem rotorfesten Koordinatensystem bestimmt werden,

**dadurch gekennzeichnet, dass** der bei der Testfrequenz vorhandene Anteil der Komponente des Istwerts des Motorstromraumzeigers in Richtung des flussbildenden Stromanteils bestimmt und auf unzulässig große Abweichung von einem vorgegebenen Bereich überwacht wird, wobei bei Überschreitung der zulässigen Abweichung vom vorgegebenen Bereich ein Fehlersignal ausgelöst, weitergeleitet und/oder angezeigt wird,

wobei die in Richtung des drehmomentbildenden Stromanteils bestimmte Komponente auf ein unzulässig hohes Maß an Abweichung von Null überwacht wird,

wobei der vom Wechselrichter (3) dem Elektromotor bereitgestellten Spannung eine als Wechselspannung ausgeführte Testspannung aufaddiert und überwacht wird, ob der von der Testspannung getriebene Strom in einer ersten Motorphase einen zum in einer zweiten Motorphase erfassten Stromanteil betragsgleichen, aber mit umgekehrtem Vorzeichen ausgeführten, erfassten Stromanteil aufweist und in der dritten Motorphase keinen erfassten Stromanteil aufweist, wobei überwacht wird, ob bei einem oder jedem Nulldurchgang des Motorstroms der Verlauf der Motorspannung zeitgleich einen Spannungssprung aufweist.

2. Verfahren nach Anspruch 1, **dadurch gekennzeichnet, dass** mittels einer zweiten Signalelektronik (2) des Antriebssystems aus den erfassten Messwerten unter Verwendung der vom Winkellagensensor (E) erfassten Winkelpositionen des Rotors des Elektromotors ebenfalls die Komponenten des Istwerts des Motorstromraumzeigers in einem rotorfesten Koordinatensystem bestimmt werden, wobei ebenfalls der bei der Testfrequenz vorhandene Anteil der in Richtung des flussbildenden Stromanteils vorhandenen Komponente des Istwerts des Motorstromraumzeigers bestimmt wird und auf unzulässig große Abweichung von dem vorgegebenen Bereich überwacht wird,

insbesondere wobei ebenfalls bei Überschreiten der zulässigen Abweichung vom vorgegebenen Bereich ein Fehlersignal ausgelöst, weitergeleitet und/oder angezeigt wird.

3. Verfahren nach Anspruch 2, **dadurch gekennzeichnet, dass** die jeweilige, von der ersten Signalelektronik (1) bestimmte Komponente auf ein unzulässig großes Maß an Abweichung von der jeweiligen, von der zweiten Signalelektronik (2) bestimmten Komponente überwacht wird, insbesondere wobei bei Überschreiten der zulässigen Abweichung vom vorgegebenen Bereich ein Fehlersignal ausgelöst, weitergeleitet und/oder angezeigt wird.

4. Verfahren nach einem der vorangegangenen Ansprüche, **dadurch gekennzeichnet, dass** mittels der Stromsensoren (4) nur Stromwerte einer ersten und einer zweiten Motorphase erfasst werden und der Wert der dritten Motorphase rechnerisch bestimmt wird als mit umgekehrtem Vorzeichen versehene Summe der Stromwerte der ersten und zweiten Motorphase.

5. Antriebssystem, das einen Wechselrichter (3), welcher einen Regler für den flussbildenden Stromanteil eines Motorstromraumzeigers, einen von dem Wechselrichter (3) gespeisten Elektromotor (M), insbesondere Drehstrommotor, eine erste Signalelektronik (1), einen mit dem Rotor des Elektromotors verbundenen Winkellagensensor (E) und Stromsensoren (4) zur Erfassung des in einer jeweiligen Motorphase fließenden Stroms aufweist,

wobei Signale des Winkelsensors (E) einerseits dem Wechselrichter (3) und andererseits der ersten Signalelektronik (1) und insbesondere einer zweiten Signalelektronik (2) des Antriebssystems, zugeführt werden,

wobei zumindest der ersten Signalelektronik (1) die von den Stromsensoren (4) zur Erfassung von Motorphasenströmen erfassten Messwerte als insbesondere tiefpassgefilterter (5) digitaler Datenstrom zugeleitet werden,

wobei die erste Signalelektronik (1), insbesondere mittels eines Mittels, ein mit einer Testfrequenz periodisches Testsignal erzeugt, welches einem Sollwert aufaddiert wird,

wobei eine Regelabweichung die Differenz zwischen dem aus dem Testsignal und dem Sollwert gebildeten Summensignal und einem aus den Messwerten und dem Signal des Winkellagensensors gebildeten Istwert des flussbildenden Anteils des Motorstromraumzeigers, insbesondere eines in einem Rotorfesten Koordinatensystem dargestellten Motorstromraumzeigers, ist,

wobei der Wechselrichter (3) dem Elektromotor eine derartige Spannung, insbesondere pulsweitenmoduliert erzeugte Spannung, bereitstellt, dass der Istwert auf das Summensignal hingeregelt wird,

wobei mittels der ersten Signalelektronik (1) aus den erfassten Messwerten unter Verwendung der vom Winkellagensensor erfassten Winkelpositionen des Rotors des Elektromotors die Komponenten des Istwerts des Motorstromraumzeigers in einem rotorfesten Koordinatensystem bestimmt werden,

**dadurch gekennzeichnet, dass** der bei der Testfrequenz vorhandene Anteil der Komponente des Istwerts des Motorstromraumzeigers in Richtung des flussbildenden Stromanteils bestimmt wird und auf unzulässig große Abweichung von einem vorgegebenen Bereich überwacht wird, wobei bei Überschreitung der zulässigen Abweichung vom vorgegebenen Bereich ein Fehlersignal ausgelöst, weitergeleitet und/oder angezeigt wird,

wobei die in Richtung des drehmomentbildenden Stromanteils bestimmte Komponente auf ein unzulässig hohes Maß an Abweichung von Null überwacht wird,

wobei die erste Signalelektronik ein mit einem Mittel zur Überwachung verbundenen Mittel zur Addition einer als Wechselspannung ausgeführten Testspannung auf die vom Wechselrichter dem Elektromotor bereitgestellten Spannung aufweist,

wobei der vom Wechselrichter (3) dem Elektromotor (M) bereitgestellten Spannung eine als Wechselspannung ausgeführte Testspannung aufaddiert wird und von dem Mittel zur Überwachung überwacht wird, ob der von der Testspannung getriebene Strom in einer ersten Motorphase einen zum in einer zweiten Motorphase erfassten Stromanteil betragsgleichen, aber mit umgekehrtem Vorzeichen ausgeführten, erfassten Stromanteil aufweist und in der dritten Motorphase keinen erfassten Stromanteil aufweist, und

wobei die erste Signalelektronik (1) ein Mittel zur Überwachung, ob bei einem oder jedem Nulldurchgang des Motorstroms der Verlauf der Motorspannung zeitgleich einen Spannungssprung, aufweist.

6. Antriebssystem nach Anspruch 5, **dadurch gekennzeichnet, dass** das Signal des jeweiligen Stromsensors (4) zur Erfassung des jeweiligen Motorphasenstroms einem Sigma-Delta-Wandler zugeführt wird, dessen digitaler 1-Bit-breiter Ausgangsdatenstrom einem digitalen Filter (5) zugeführt wird, dessen digitaler, insbesondere paralleler, insbesondere Mehrbit-breiter, Ausgangsdatenstrom dem Wechselrichter (3) und der ersten Signalelektronik (1) bereitgestellt wird.

**Claims**

1. Method for monitoring a drive system comprising an inverter (3), which comprises a controller for the flux-generating current portion of a motor current space vector, an electric motor (M), in particular a three-phase motor, fed by the inverter (3), first signal electronics (1), an angular position sensor (E) connected to the rotor of the electric motor, and current sensors (4) for detecting the current flowing in a particular motor phase,

wherein the measured values detected by the current sensors (4) for detecting motor phase currents are supplied to at least the first signal electronics (1) in the form of in particular a low-pass filtered digital data stream (5),

wherein the first signal electronics (1) generate, in particular by means of a means, a test signal that is periodic with a test frequency and is added to a setpoint,

wherein a control deviation is the difference between the aggregate signal, generated out of the test signal and the setpoint, and an actual value, generated out of the measured values and a signal from the angular position sensor (E), of the flux-generating portion of the motor current space vector, in particular a motor current space vector shown in a rotor-fixed coordinate system,

wherein the inverter (3) provides the electric motor with such a voltage, in particular a voltage generated in a pulse-width-modulated manner, that the actual value is controlled towards the aggregate signal,

wherein, by means of the first signal electronics (1), the components of the actual value of the motor current space vector are determined in a rotor-fixed coordinate system out of the detected measured values using the angular positions of the rotor of the electric motor (M) that are detected by the angular position sensor (E),

**characterised in that** the portion, present at the test frequency, of the component of the actual value of the motor current space vector in the direction of the flux-generating current portion is determined and monitored for an impermissibly large deviation from a predetermined range, wherein a fault signal is triggered, relayed and/or displayed if the permitted deviation from the predetermined range is exceeded,

wherein the component determined in the direction of the torque-generating current portion is monitored for an impermissibly high level of deviation from zero,

wherein the voltage provided to the electric motor by the inverter (3) is added to a test voltage, which is configured as an AC voltage, and it is monitored whether the current driven by the test voltage has, in a first motor phase, a detected current portion that is identical in magnitude to the current portion detected in a second motor phase but with the opposite sign, and whether, in the third motor phase, it has no detected current portion, wherein it is monitored whether the curve of the motor voltage simultaneously has a voltage jump at a or each zero crossing of the motor current.

2. Method according to claim 1, **characterised in that**, by means of second signal electronics (2) of the drive system, the components of the actual value of the motor current space vector are likewise determined in a rotor-fixed coordinate system out of the detected measured values using the angular positions of the rotor of the electric motor that are detected by the angular position sensor (E), wherein the portion, present at the test frequency, of that component of the actual value of the motor current space vector which is present in the direction of the flux-generating current portion is likewise determined and monitored for an impermissibly large deviation from the predetermined range,
in particular wherein a fault signal is likewise triggered, relayed and/or displayed if the permitted deviation from the predetermined range is exceeded.

3. Method according to claim 2, **characterised in that** each component determined by the first signal electronics (1) is monitored for an impermissibly large level of deviation from the respective component determined by the second signal electronics (2), in particular wherein a fault signal is triggered, relayed and/or displayed if the permitted deviation from the predetermined range is exceeded.

4. Method according to any of the preceding claims, **characterised in that** the current sensors (4) detect only current values of a first and a second motor phase, and the value of the third motor phase is calculated as the sum of the current values of the first and the second motor phase but with the opposite sign.

5. Drive system comprising an inverter (3), which comprises a controller for the flux-generating current portion of a motor current space vector, an electric motor (M), in particular a three-phase motor, fed by the inverter (3), first signal electronics (1), an angular position sensor (E) connected to the rotor of the electric motor, and current sensors (4) for detecting the current flowing in a particular motor phase,

wherein signals from the angle sensor (E) are supplied both to the inverter (3) and to the first signal electronics (1) and in particular to second signal electronics (2) of the drive system, wherein the measured values detected by the current sensors (4) for detecting motor phase currents are supplied to at least the first signal electronics (1) in the form of in particular a low-pass filtered digital data stream (5),

wherein the first signal electronics (1) generate, in particular by means of a means, a test signal that is periodic with a test frequency and is added to a setpoint,

wherein a control deviation is the difference between the aggregate signal, generated out of the test signal and the setpoint, and an actual value, generated out of the measured values and the signal from the angular position sensor, of the flux-generating portion of the motor current space vector, in particular a motor current space vector shown in a rotor-fixed coordinate system,

wherein the inverter (3) provides the electric motor with such a voltage, in particular a voltage generated in a pulse-width-modulated manner, that the actual value is controlled towards the aggregate signal,

wherein, by means of the first signal electronics (1), the components of the actual value of the motor current space vector are determined in a rotor-fixed coordinate system out of the detected measured values using the angular positions of the rotor of the electric motor that are detected by the angular position sensor,

**characterised in that** the portion, present at the test frequency, of the component of the actual value of the motor current space vector in the direction of the flux-generating current portion is determined and monitored for an impermissibly large deviation from a predetermined range, wherein a fault signal is triggered, relayed and/or displayed if the permitted deviation from the predetermined range is exceeded,

wherein the component determined in the direction of the torque-generating current portion is monitored for an impermissibly high level of deviation from zero,

wherein the first signal electronics have a means, connected to a monitoring means, for adding a test voltage, which is configured as an AC voltage, to the voltage provided to the electric motor by the inverter,

wherein the voltage provided to the electric motor (M) by the inverter (3) is added to a test voltage, which is configured as an AC voltage, and it is monitored, by the monitoring means, whether the current driven by the test voltage has, in a first motor phase, a detected current portion that is identical in magnitude to the current portion detected in a second motor phase but with the opposite sign, and whether, in the third motor phase, it has no detected current portion, and wherein the first signal electronics (1) have a means for monitoring whether the curve of the motor voltage simultaneously has a voltage jump at a or each zero crossing of the motor current.

6. Drive system according to claim 5, **characterised in that** the signal from the respective current sensor (4) for detecting respective motor phase currents is supplied to a sigma-delta converter, the digital 1 bit-wide output data stream of which is supplied to a digital filter (5), the digital, in particular parallel, in particular multi-bit-wide, output data stream of which is provided to the inverter (3) and to the first signal electronics (1).

**Revendications**

1. Procédé de surveillance d'un système d'entraînement muni d'un onduleur (3) comprenant un régulateur dévolu à la part de courant, formatrice de flux, d'un vecteur spatial de courant de moteur, un moteur électrique (M) alimenté par ledit onduleur (3), en particulier un moteur triphasé, une première électronique de signaux (1), un capteur (E) de positions angulaires, connecté au rotor dudit moteur électrique, et des capteurs de courant (4) affectés à la détection du courant circulant dans une phase respective du moteur, sachant que les valeurs de mesure, saisies par lesdits capteurs de courant (4) en vue de la détection de courants de phases du moteur, sont délivrées au moins à ladite première électronique de signaux (1), en tant que flux de données numériques notamment soumis à filtrage passe-bas (5),

laquelle première électronique de signaux (1) engendre, en particulier à l'aide d'un moyen, un signal de test périodique à une fréquence de test, qui est ajouté à une valeur de consigne, un écart de régulation étant la différence entre le signal de somme, formé sur la base dudit signal de test et de ladite valeur de consigne, et une valeur réelle, formée sur la base desdites valeurs de mesure et d'un signal du capteur (E) de positions angulaires, de la part formatrice de flux du vecteur spatial de courant du moteur, en particulier d'un vecteur spatial de courant dudit moteur illustré dans un système de coordonnées assujetti au rotor, ledit onduleur (3) fournissant une tension audit moteur électrique, notamment une tension engendrée avec modulation de largeurs d'impulsions, de telle sorte que ladite valeur réelle soit régulée sur ledit signal de somme,
sachant que les composantes de la valeur réelle dudit vecteur spatial de courant du moteur sont déterminées dans un système de coordonnées assujetti au rotor, au moyen de ladite première électronique de signaux (1), sur la base des valeurs de mesure saisies, avec utilisation des emplacements angulaires du rotor dudit moteur électrique (M) détectés par ledit capteur (E) de positions angulaires,
**caractérisé par le fait que** la proportion de la composante de la valeur réelle du vecteur spatial de courant du moteur, se présentant à la fréquence de test, est déterminée dans la direction de la part de courant formatrice de flux et est surveillée quant à un écart intolérablement grand par rapport à une plage préétablie, un signal d'erreur étant déclenché, transmis et/ou affiché pour le cas où l'écart admissible excède ladite plage préétablie,
sachant que la composante, déterminée dans la direction de la part de courant formatrice de couples de rotation, est surveillée quant à un degré d'écart intolérablement élevé par rapport à zéro,
sachant qu'une tension de test, conçue comme une tension alternative, est ajoutée à la tension fournie au moteur électrique par l'onduleur (3) et est surveillée en vue d'établir si le courant porté par ladite tension de test comporte, dans une première phase du moteur, une part de courant détectée présentant une valeur égale à celle de la part de courant détectée dans une deuxième phase du moteur, mais affectée d'un signe inverse, et ne comporte aucune part de courant détectée dans une troisième phase dudit moteur, sachant qu'il s'opère une surveillance visant à établir si l'allure de la tension du moteur présente simultanément un saut de tension lors d'un, ou de chaque passage par zéro du courant dudit moteur.

2. Procédé selon la revendication 1, **caractérisé par le fait que** les composantes de la valeur réelle du vecteur spatial de courant du moteur sont pareillement déterminées dans un système de coordonnées assujetti au rotor, au moyen d'une seconde électronique de signaux (2) du système d'entraînement, sur la base des valeurs de mesure saisies, avec utilisation des emplacements angulaires du rotor du moteur électrique détectés par le capteur (E) de positions angulaires, sachant que la proportion de la composante de la valeur réelle dudit vecteur spatial de courant du moteur, se présentant à la fréquence de test, est pareillement déterminée dans un système de coordonnées assujetti au rotor, dans la direction de la part de courant formatrice de flux, et est surveillée quant à un écart intolérablement grand par rapport à la plage préétablie,
sachant, en particulier, qu'un signal d'erreur est pareillement déclenché, transmis et/ou affiché pour le cas où l'écart admissible excède ladite plage préétablie.

3. Procédé selon la revendication 2, **caractérisé par le fait que** la composante considérée, déterminée par la première électronique de signaux (1), est surveillée quant à un degré d'écart intolérablement élevé par rapport à la composante respective déterminée par la seconde électronique de signaux (2), sachant, en particulier, qu'un signal d'erreur est déclenché, transmis et/ou affiché pour le cas où l'écart admissible excède la plage préétablie.

4. Procédé selon l'une des revendications précédentes, **caractérisé par le fait que** seules des valeurs de courant de première et deuxième phases du moteur sont détectées au moyen des capteurs de courant (4) et la valeur de la troisième phase dudit moteur est déterminée, par calculs, en tant que somme des valeurs de courant desdites première et deuxième phases dudit moteur, affectée d'un signe inverse.

5. Système d'entraînement équipé d'un onduleur (3) comprenant un régulateur dévolu à la part de courant, formatrice de flux, d'un vecteur spatial de courant de moteur, un moteur électrique (M) alimenté par ledit onduleur (3), en particulier un moteur triphasé, une première électronique de signaux (1), un capteur (E) de positions angulaires, connecté au rotor dudit moteur électrique, et des capteurs de courant (4) affectés à la détection du courant circulant dans une phase respective du moteur,

des signaux dudit capteur (E) de positions angulaires étant appliqués, d'une part, audit onduleur (3) et, d'autre part, à ladite première électronique de signaux (1) et notamment à une seconde électronique de signaux (2) dudit système d'entraînement,
sachant que les valeurs de mesure, saisies par lesdits capteurs de courant (4) en vue de la détection de courants de phases du moteur, sont délivrées au moins à ladite première électronique de signaux (1), en tant que flux de données numériques notamment soumis à filtrage passe-bas (5),
laquelle première électronique de signaux (1) engendre, en particulier à l'aide d'un moyen, un signal de test périodique à une fréquence de test, qui est ajouté à une valeur de consigne, un écart de régulation étant la différence entre le signal de somme, formé sur la base dudit signal de test et de ladite valeur de consigne, et une valeur réelle, formée sur la base desdites valeurs de mesure et d'un signal du capteur de positions angulaires, de la part formatrice de flux du vecteur spatial de courant du moteur, en particulier d'un vecteur spatial de courant dudit moteur illustré dans un système de coordonnées assujetti au rotor, ledit onduleur (3) fournissant une tension audit moteur électrique, notamment une tension engendrée avec modulation de largeurs d'impulsions, de telle sorte que ladite valeur réelle soit régulée sur ledit signal de somme, sachant que les composantes de la valeur réelle dudit vecteur spatial de courant du moteur sont déterminées dans un système de coordonnées assujetti au rotor, au moyen de ladite première électronique de signaux (1), sur la base des valeurs de mesure saisies, avec utilisation des emplacements angulaires du rotor dudit moteur électrique détectés par ledit capteur de positions angulaires,
**caractérisé par le fait que** la proportion de la composante de la valeur réelle du vecteur spatial de courant du moteur, se présentant à la fréquence de test, est déterminée dans la direction de la part de courant formatrice de flux et est surveillée quant à un écart intolérablement grand par rapport à une plage préétablie, un signal d'erreur étant déclenché, transmis et/ou affiché pour le cas où l'écart admissible excède ladite plage préétablie,
sachant que la composante, déterminée dans la direction de la part de courant formatrice de couples de rotation, est surveillée quant à un degré d'écart intolérablement élevé par rapport à zéro,
sachant que la première électronique de signaux est pourvue d'un moyen, raccordé à un moyen dévolu à la surveillance, en vue d'ajouter une tension de test, conçue comme une tension alternative, à la tension fournie au moteur électrique par l'onduleur,
sachant qu'une tension de test, conçue comme une tension alternative, est ajoutée à la tension fournie audit moteur électrique (M) par ledit onduleur (3) et est surveillée, par le moyen dévolu à la surveillance, en vue d'établir si le courant porté par ladite tension de test comporte, dans une première phase du moteur, une part de courant détectée présentant une valeur égale à celle de la part de courant détectée dans une deuxième phase du moteur, mais affectée d'un signe inverse, et ne comporte aucune part de courant détectée dans une troisième phase dudit moteur, et
sachant que ladite première électronique de signaux (1) est dotée d'un moyen conçu pour surveiller si l'allure de la tension du moteur présente simultanément un saut de tension lors d'un, ou de chaque passage par zéro du courant dudit moteur.

6. Système d'entraînement selon la revendication 5, **caractérisé par le fait que** le signal du capteur de courant (4) considéré est appliqué, en vue de la détection du courant de phase de moteur respectif, à un convertisseur sigma-delta dont le flux de données numériques de sortie, d'une largeur de 1 bit, est délivré à un filtre numérique (5) dont le flux de données numériques de sortie notamment parallèle, d'une largeur de plusieurs bits en particulier, est fourni à l'onduleur (3) et à la première électronique de signaux (1).

i_d_Soll_test

$I_d, I_q$

1

2

sinc k

sinc k

sinc k

5

5

ΣΔ

4

4

4

$I_u$

$I_v$

$I_w$

3

E

M

Fig. 1

Fig. 2

Fig. 3

EP 3 895 303 B1

Fig. 4

5V

EP 3 895 303 B1

Fig. 5

U_PWM

+5V

0V

-5V

t

I

EP 3 895 303 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012205540 A1
- DE 102014224555 A1
- DE 102009035998 A1
- DE 69406428 T2